# EUROPÄISCHE PATENTSCHRIFT

(11) **EP 0 666 805 B1**
(45) Veröffentlichungstag und Bekanntmachung des Hinweises auf die Patenterteilung: **07.01.1998**
(21) Anmeldenummer: 93924058.6
(22) Anmeldetag: 27.10.1993
(51) Int. Cl.: B60L 11/18, H02J 7/00

(54) **VERFAHREN ZUM AUTOMATISCHEN BERÜHRUNGSLOSEN LADEN**
PROCESS FOR AUTOMATIC CONTACTLESS CHARGING
PROCEDE DE MISE EN CHARGE AUTOMATIQUE SANS CONTACT

(30) Priorität: 28.10.1992 DE 4236286
(43) Veröffentlichungstag der Anmeldung: 16.08.1995
(73) Patentinhaber: Daimler-Benz Aktiengesellschaft, 70546 Stuttgart (DE)
(72) Erfinder: SEELIG, Anton, D-65439 Flörsheim (DE)
(74) Vertreter: Fröhling, Werner Otto, Dr.
(86) Internationale Anmeldenummer: EP9302976
(87) Internationale Veröffentlichungsnummer: WO9410004

(56) Entgegenhaltungen:
- US-A- 4 347 472
- US-A- 4 656 412
- US-A- 5 157 319
- RESEARCH DISCLOSURE, Nr. 338, Juni 1992, Havant GB, Seite 517, XP315724; 'Hands free electric vehicle charging'

## Beschreibung

Die Erfindung betrifft ein Verfahren zur berürungslosen Energieübertragung beim Laden der Batterie eines Fahrzeugs, insbesondere eines Elektroautos, nach dem Oberbegriff des Anspruchs 1.

Es ist bereits bekannt, die Batterie von Elektrofahrzeugen über induktive Ladestationen aufzuladen (Rhein-Main-Presse v. 18.07.1992). Hierzu wird eine Ladespule manuell in den Schlitz eines außerhalb frontal am Fahrzeug angeordneten Aufnahmemoduls eingeführt und anschließend elektrische Energie vom Ladegerät an die Battorie übertragen. Obwohl dieses System der Energieübertragung, da die Sekundärspule geschützt im Aufnahmemodul liegt, betriebs- und anwendungssicher ist, ist es doch andererseits wegen der am konventionellen Betanken eines Benzinautos orientierten Einbringung der Ladespule in das Aufnahmemodul in der Handhabung recht umständlich. Darüberhinaus kann das außerhalb am Elektroauto angeordnete Aufnahmemodul mechanische, aerodynamische und ästhetische Nachteile des Fahrzeugs zur Folge haben.

In dem Patent US-A-5,157,319, welches als nächstliegender Stand der Technik angesehen wird, ist ein kontaktloses Ladesystem zum Laden einer Batterie in einem elektrischen Fahrzeug beschrieben. Dieses System besteht aus einem Primärwandler, welcher Energie aus einer Energiequelle in hochfrequente Energie umwandelt. Ein sekundärer Wandler im Fahrzeug ist mit der Batterie verbunden, um die hochfrequente Energie zum Laden der Batterie zu verwenden. Primäre und sekundäre Wandler werden mit einem kontaktlosen Kopplungselement miteinander verbunden. Dieses Kopplungselement besitzt auf der Primärseite einen magnetischen Kern, auf welchem eine Wicklung aufgebracht ist. Die Sekundärwicklung wird an diese Primärwicklung koaxial angekoppelt. Zu diesem Zweck werden die Primärwicklung und der Kern auseinandergeklappt.

Aus dem US-Patent US 4,656,412 ist eine Batterieladeeinrichtung bekannt, welche aus einem Energieübertragungsteil und einer elektrischen Schaltungsanordnung besteht. Die Lade-Einrichtung liefert eine Ausgangsspannung, welche der Frequenz der Eingangswechselspannung proportional ist. Ein Hochfrequenzwandler speist einen Transformator mit einem Eisenkern im Ausgang, sowie eine Drosselspule und einen Kondensator, welche mit dem Transformator in Serie geschaltet sind, und welche auf der dritten Harmonischen der Wechselspannung des Hochfrequenzwandlers abgestimmt sind. Der Ausgang dieses Resonanzkreises wird gleichgerichtet und der Strom einer Batterie zugeführt, die aufgeladen wird. Ein Rückkopplungskreis vergleicht die Spannung über dem Ausgang der Batterie mit einer Referenzspannung und kontrolliert die Frequenz der Wechselspannung, welche durch den Hochfrequenzwandler erzeugt wird, um die Spannung am Ausgang auf einem vorgewählten Wert zu halten. Eine zweite Drossel ist als Sicherung gegen Kurzschlüsse vorgesehen.

Nachteilig ist die Wege behindernde Kabelverbindung zum Elektroauto, die beim Laden der Batterien für eine wesentlich längere Zeit besteht als die Verbindung über einen Benzinschlauch zur Tanksäule. Außerdem sollten auch Ladegeräte unterschiedlicher Ladeleistung und von verschiedenen Herstellern ohne großen Aufwand an das Fahrzeug ankoppelbar sein.

Das langsame Laden mit einem Heimladegerät kleiner Leistung und das schnelle Laden über ein leistungsstarkes Ladegerät beispielsweise in einem Parkhaus während des Einkaufens Verden die gängige Praxis sein. Da die Abmessungen der Ladespule mit der Leistung variieren, müssen bei einer Anordnung mit einer in einen Schlitz zu schiebenden oder klappbaren Spule sowohl der Schlitz als auch die Spule die Abmessungen für die größte Leistung haben.

Beim Laden der Batterie eines Elektrofahrzeuges besteht daher das Problem, neben einer hohen Betriebs- und Anwendungssicherheit auch eine einfache und bequeme Handhabung zu erreichen. Hierbei ist zu beachten, daß einerseits eine einfache und bequeme Handhabung eines solchen Systems bei nicht zu hohem mechanischem Aufwand eine leichte Zugänglichkeit der induktiven Energieübertragungskomponenten erfordert, andererseits damit aber wegen der größeren Kopplung an Umwelteinflüsse, insbesondere Verschmutzung o.ä., eine größere Gefahr der Beeinträchtigung der Betriebs- und Anwendungssicherheit gegeben ist.

Der vorlegenden Erfindung liegt die Aufgabe zugrunde, ein bei hoher Betriebs- und Anwendungssicherheit einfaches und für den Anwender bequemes Verfahren zur berührungslosen Energieübertragung beim Laden eines Elektrofahrzeuges, die auch die Kopplung induktiver Energieübertragungskomponenten, die für unterschiedliche Leistungen ausgelegt sind, ohne Mehraufwand an dem Ladegerät kleinerer Leistung ermöglicht.

Diese Aufgabe wird durch die Merkmale des Patentanspruchs 1 gelöst. Vorteilhafte Ausführungsformen der Erfindung sind in den Unteransprüchen enthalten.

Im folgenden wird die Erfindung anhand von Zeichnungen näher erläutert.
- Figur 1: zeigt schematisch eine erfindungsgemäße Vorrichtung und illustriert das erfindungsgemäße Verfahren zur berührungslosen Energieübertragung;
- Figur 2: zeigt schematisch eine Ausführungsform eines induktiven Übertragers;
- Figur 3: zeigt eine bevorzugte Ausführungsform der elektronischen Komponente der erfindungsgemäßen Vorrichtung ohne Sensorik;
- Figur 4: zeigt ein Ersatzschaltbild für die Ausführungsform nach Figur 2;
- Figur 5: zeigt das zu dem Schaltbild von Figur 3 gehörige Zeigerdiagramm;
- Figur 6: zeigt ein Blockdiagramm der Positionssteuerung des Primärelements;

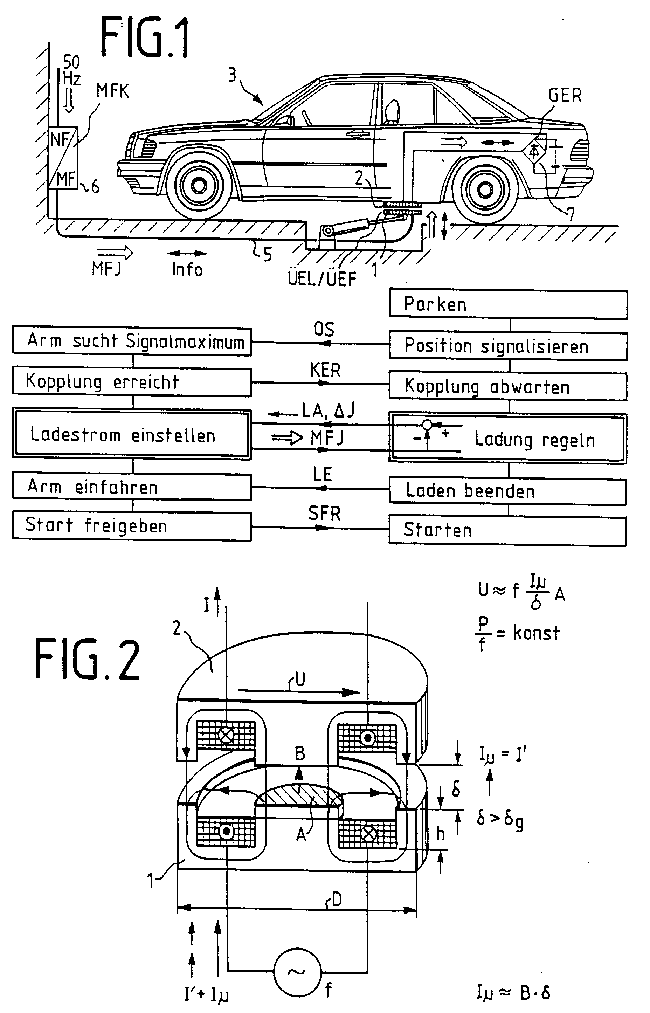

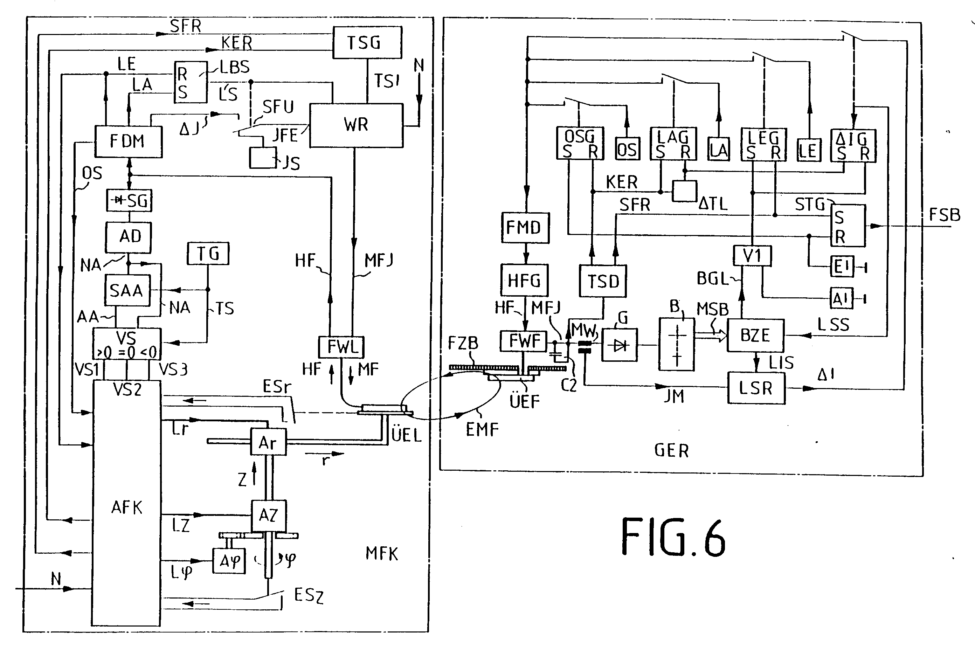

Figur 1 zeigt eine Vorrichtung zur Durchführung des erfindungsgemäßen Verfahrens, bei der das Primärelement 1 eines induktiven Übertragers in eine Näherungsposition zu dem Sekundärelement 2 des Übertragers gebracnt ist, das sich auf der Unterseite eines Elektroautos 3 befindet. Das Primärelement 1 wird durch eine sensorgesteuerte Mechanik, wie im Zusammenhang mit Figur 6 näher erläutert wird, entsprechend den verschiedenen Phasen des Ladevorgangs bewegt. Das Sekundärelement 2 ist beim Ausführungsbeispiel nach Figur 1 auf der Unterseite des Elektroautos offen zugänglich angebracht. Andererseits besteht auch die Möglichkeit der Anbringung an anderen Stellen des Fahrzeugs sowie einer Abdeckung zum mechanischen Schutz gegenüber Umwelteinflüssen wie Schmutz usw., die, sobald das Fahrzeug in die Näherungsposition zum Primärelement des Übertragers gebracht ist, das Sekundärelement 2 offen zugänglich werden läßt. Sobald das Sekundärelement 2 offen zugänglich ist, kann das Primärelement 1 sensorgesteuert motorisch in eine vorgegebene Position zum Sekundärelement 2 gebracht werden.

Die Erfindung geht von der Erkenntnis aus, daß bei entsprechender Auslegung der Übertragungselemente 1, 2 sowie der primär- und sekundärseitigen elektronischen Komponenten bei einer Mittelfrequenz von z.B. 25 kHz elektrische Energie über einen Luftspalt in der Größenordnung bis etwa 1 cm vom Primärelement 1 zum Primärelement 2 übertragen werden kann. Eine Schlitzführung des Primärelements ist daher nicht erforderlich. Das Primärelement 1 ist über Leitungen 5 energetisch und signalmäßig mit dem Ladegerät 6 verbunden. In dem Ladegerät 6 erfolgt das Erzeugen der Mittelfrequenz von ca. 25 kHz sowie das Einstellen der Leistung.

Im Beispiel nach der Figur 1 ist das Übertragungssystem an das Drehstromnetz von 400 Volt und 50 Hertz angeschlossen. Eine solche Lösung ist für ein schnelles Aufladen mit Ladeleistungen im 10 kW-Bereich, zum Beispiel in Parkhäusern während des Einkaufens, vorteilhaft. Ein Heimladegerät kleiner Leistung kann mit einem hohenverstellbaren Primärelement unter das Sekundärelement am Fahrzeug gestellt werden. Das Sekundärelement 2 ist mit einem Gleichrichter 7 verbunden, über den die Batterie des Elektrofahrzeugs geladen wird.

Primärelement 1 und Sekundärelement 2 des induktiven Übertragers sind im wesentlichen jeweils eine Energieübertragung über einen Luftspalt ausgelegte Induktionsspulen mit einem weichmagnetischen Kern, die zur Isolierung gegenüber der Umwelt in Kunstharz o.ä. eingegossen sind. Figur 2 zeigt eine einfache Ausführungsform eines solchen induktiven Übertragers. Primärelement 1 und Sekundärelement 2 sind schalenförmig ausgebildet und stehen sich mit einem Abstand δ gegenüber. Als Magnetwerkstoffe sind Ferrite geeignet. Dieser Übertrager unterscheidet sich von einem herkömmlichen Transformator durch den Einfluß des Luftspaltes δ auf die magnetische Flußdichte B und den Magnetisierungsstrom Iµ.

Der Zusammenhang zwischen beiden Größen ist bei einem üblichen Transformator durch die Magnetisierungskennlinie des weichmagnetischen Werkstoffes gegeben. Dabei ist der Magnetisierungsstrom Iµ in der Regel klein gegenüber dem vom Ausgangskreis auf den Eingangskreis übertragenen Strom I'. Bei einem berührungslosen Übertrager, wie in Figur 2, ist der Magnetisierungsstrom Iµ proportional zu dem Produkt der magnetischen Flußdichte B und der Spaltweite δ. Da der Magnetisierungsstrom zum Leistungstransport nicht beiträgt, aber wie der übertragene Strom Verluste erzeugt und die Quelle belastet, ist es notwendig ihn von einer Grenzspaltweite δ_{g} an auf die Stärke des übertragenen Stromes I' zu begrenzen. Die magnetische Flußdichte B muß daher oberhalb der Grenzspaltweite reziprok zur Spaltweite abgesenkt werden. Sie liegt bei größeren Spaltweiten wesentlich unter den in Magnetwerkstoffen üblichen Werten. Damit dennoch bei kleinen Abmessungen der Übertrager eine große Spannung U und eine entsprechende Leistung übertragen werden, muß die Frequenz f ausreichend hoch sein. Die übertragbare Leistung P ist bei thermisch nicht ausgelasteten Übertragern proportional zur Frequenz f.

Bei einer gegebenen Spaltweite ist es jedoch nicht möglich den Feldquerschnitt A und den Durchmesser eines Übertragers durch Erhöhen der Frequenz beliebig zu verkleinern. Mit abnehmendem Durchmesser wächst der Anteil des magnetischen Streuflusses, der jeweils nur eine Wicklung umfaßt, auf Kosten des mit beiden Wicklungen verketteten Hauptflusses. Dadurch geht die magnetische Kopplung der Wicklungen sowie die übertragene Spannung zurück und der induktive Widerstand in den Stromkreisen nimmt zu.

Bei Spaltweiten im cm-Bereich benötigt man bei Leistungen von 1 kW bis 10 kW Übertragungselemente mit einem Durchmesser von 20 bis 25 cm. Die Wicklungshöhe h ist im Verhältnis zum Durchmesser D klein. Die Übertragerelemente haben daher eine niedrige Bauform. Sie bestehen bei großen Spaltweiten aus Ferritplatten mit aufliegenden flachen Spulen. Zur Vermeidung der bei hohen Frequenzen auftretenden Wirbelstromverlusten sind die Spulenleiter aus dünnen isolierten Einzeldrähten mit innerhalb des Querschnitts wechselnder Lage aufgebaut. Berührungslose Übertragerelemente für 25 kHz benötigen nur wenige Prozent des für leistungsgleiche 50-Hertz-Transformatoren erforderlichen Materials, so daß auch ihre auf die Leistung bezogenen Verluste kleiner sind.

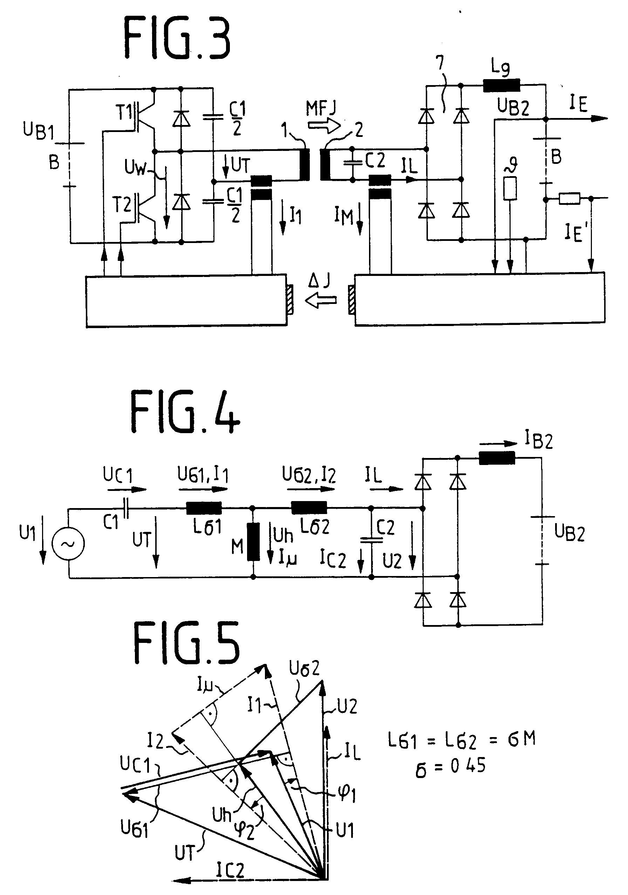

Figur 3 zeigt eine mögliche Ausführungsform der mit dem Primärelement 1 verbundenen Mittelfrequenzquelle und des mit dem Sekundärelement 2 verbundenen Gleichrichters. Hier bezeichnen UB1 bzw. UB2 die Betriebsspannung des Wechselrichters bzw. die Spannung der zu ladenden Batterie. IL bezeichnet den über die Elemente 1 und 2 übertragenen Ladestrom. Zwischen dem Ladestromsteller des Wechselrichters und dem Ladestromregler der Batterie besteht eine berührungsfreie Informationsübertragung. Der Ladestromregler erhält seinen Sollwert für die Ladestromregelung von der Batteriezustandserfassung BZE. Diese enthält Sensoren zur Erfassung der Batteriespannung UB2, des Entladestroms IE, des Ladestroms IL, der Temperatur ϑ und eventuell weiterer, den Zustand der Batterie kennzeichnenden Größen sowie einen Prozessor und einen Speicher, mit deren Hilfe der Zustand der Batterie über ihre Lebensdauer verfolgt werden kann. Der Ladestromsollwert wird entsprechend dem ermittelten Batteriezustand gewählt und die Abweichung ΔJ zu dem tatsächlichen Ladestromsteller des Wechselrichters übertragen.

Figur 4 zeigt ein Ersatzschaltbild der Schaltung gemäß Figur 2. Danach bilden die primäre Streuinduktivität Lσ1 des Übertragers mit der Parallelschaltung der beiden Kondensatoren C1/2 des Wechselrichters einen Reihenschwingkreis, die sekundäre Seite des Übertragers und der Kondensator C2 dagegen einen Parallelschwingkreis. Die eingezeichneten elektrischen Größen beziehen sich auf die Grundschwingungen. Die Eingangsspannung U1 ist die Grundschwingung der Wechselrichterspannung UW. Die Schwingungsamplituden sind durch Verändern der Wechselrichterfrequenz oder durch Modulation der Einschaltdauer der Leistungshalbleiter T1, T2 einstellbar. Die weiteren Betrachtungen gehen von dem zweiten Verfahren aus, das bei annähernd konstanter Frequenz die Einstellung der Spannungsgrundschwingung U1 ermöglicht. Die höchste Eingangsspannung U1 und die größten Schwingungsamplituden entstehen bei gleichlangen Einschaltzeiten von T1 und T2. Der eingeschwungene Zustand ist durch ein Einschaltverhältnis der Leistungshalbleiter T1 und T2 gekennzeichnet, bei dem der gewünschte Ladestrom IL fließt und die primärseitige Spannungsguelle UB1 gerade die Summe von sekundärseitiger Ladeleistung und Schaltungsverlusten liefert.

Die Wirkungsweise des Übertragungsverfahrens wird im Zeigerdiagramm, Figur 5, genauer erläutert. Beim Nulldurchgang der Kondensatorspannung U2 wird der annähernd konstante Batteriestrom IB2 von einer Brückendiagonale auf die andere kommutiert. Auf der Wechselstromseite ist die Grundschwingung IL dieses Stromes phasengleich mit der Kondensatorspannung U2. Die Kapazität des Kondensators C2 ist so gewählt, daß bei maximalem Ladestrom die sekundärseitige Streuspannung Uσ2 vollständig kompensiert wird, d.h. die Übertragersekundärseite mit der Gleichrichterlast und dem Kondensator C2 wirkt in diesen Betriebszustand annähernd wie ein zur Hauptinduktivität M parallel geschalteter Widerstand. Dies zeigt im Zeigerdiagramm der kleine Phasenwinkel ϕ 2 zwischen der Hauptfeldspannung Uₕ und dem Sekundärstrom I2. Die primärseitige Streuinduktivität Lσ1 und die Gegeninduktivität M sind durch die beiden Kondensatoren C1/2 des Wechselrichters soweit kompensiert, daß auch auf der Primärseite nur eine kleine Phasenverschiebung ϕ 1 zwischen der Eingangsspannung U1 und dem Eingangsstrom I1 besteht. Der im Zeigerdiagramm verwendeten Streuziffer von σ =0,45 entspricht bei einem Schalenkernübertrager gemäß Figur 2 ein mechanischer Luftspalt von etwa 1,5 cm.

Die Sohaltungselemente sind so ausgelegt, daß der Reihenschwingkreis der primären Seite und der Parallelschwingkreis der Sekundärseite bei derselben Frequenz in Resonanz kommen. Im Resonanzpunkt wird die maximale Leistung übertragen.

Der Batterieladestrom IL wird in Figur 3 induktiv gemessen. Der Meßstrom IM wird dem Ladestromregler zugeführt. Die auf den Ladestromsteller übertragene Stromabweichung ΔI verändert, wie oben ausgeführt, entweder die Wechselrichterfrequenz oder die Einschaltdauer der Leistungshalbleiter T1 und T2 bis der benötigte Ladestrom eingestellt ist.

Fig. 6 zeigt den Blockschaltplan einer Anordnung zum automatisierten Laden. Die Anordnung besteht aus der Mittelfrequenzstromquelle und Koppeleinrichtung MFK des Ladegerätes und der Gleichricht-, Erfassungs- und Regeleinrichtung GER auf dem Fahrzeug. Nach dem Aktivieren des Ladegeräts, beispielsweise durch Einwerfen einer Münze, wird vom Fahrzeug aus ein Einschaltimpuls EI, z.B. über eine Taste gegeben. Dieser Einschaltimpuls schaltet über den Eingang S des Orientierungssignalgebers OSG das Orientierungssignal OS ein. Gleichzeitig wird der Startsignalgeber STG über den Rücksetzeingang R zurückgesetzt und das Signal FSB "Fahrzeug Startbereit" abgeschaltet. Das Orientierungssignal OS liegt nun am Eingang des Frequenzmodulators FMD. Es moduliert einen Hochfrequenzgenerator HFG. Das Hochfrequenzsignal HF gelangt über eine Frequenzweiche FWF auf das Übertragerelement ÜEF am Fahrzeugboden.

Über das von dem Übertragerelement ÜEF ausgehende elektromagnetische Feld entsteht eine Kopplung zu dem Übertragerelement der Ladeeinrichtung ÜEL. Das von dem Übertragerelement ÜEL empfangene Hochfrequenzsignal HF wird von der Frequenzweiche FWL aus dem Leistungskreis der Spule getrennt und einem Frequenzdemodulator FDM und einem Spitzengleichrichter SG zugeführt. Der Spitzengleichrichter SG richtet die Amplituden des Hochfrequenzsignals gleich und führt sie einem Analogdigitalwandler AD zu. Das Ausgangssignal NA gibt stets den digitalen Wert der neuesten Amplitude an. Dieser Amplitudenwert wird nun im Rhythmus eines Taktsignales, das der Taktgeber TG erzeugt, einem Speicher SAA zugeführt. Am Ausgang des Speichers SAA tritt mit jedem Taktsignal das alte Amplitudensignal, das bei dem vorhergehenden Takt gespeichert wurde, auf. Das jeweils neueste Amplitudensignal NA und das alte Amplitudensignal AA werden einer Vergleichstufe VS zugeführt. Der Vergleich des alten Amplitudensignals AA und des neuesten Amplitudensignals NA zeigt nun an, ob ein Signal wächst, gleich bleibt oder kleiner wird.

Bei steigender Amplitude ist das neueste Amplitudensignal stets größer als das alte. Das zeigt die Vergleichstufe an ihrem Ausgang VS1 mit einer logischen 1. Ändert sich die Amplitude nicht mehr, sind altes und neues Amplitudensignal gleich. Das zeigt der Ausgang VS2 mit einer logischen 1 an. Ist dagegen das alte Amplitudensignal AA größer als das neue Amplitudensignal, d.h. die Amplitude nimmt ab, so wird das Signal VS3 logisch 1. Diese Amplitudenvergleichsignale werden einer Antriebsführungs- und Koppeleinrichtung AFK zugeführt. Die Antriebsführungs- und Koppeleinrichtung steuert die Antriebe Aϕ, Az und Ar der Koppeleinrichtung. Der Antrieb Aϕ bewegt eine Drehscheibe, auf der der Antrieb Az für die Höhenverstellung des Übertragerelementes montiert ist. Der Antrieb Az bewegt über eine Spindel den Antrieb Ar in vertikaler Richtung. Der Antrieb Ar fährt einen Arm, der das Übertragerelement ÜEL trägt, in radialer Richtung aus.

Alle 3 Antriebe bilden eine kinematische Kette, d.h. die Bewegungen der einzelnen Koordinaten addieren sich im Raum. Die Steuerung der 3 Antriebe erfolgt nun über die Amplitudenvergleichsignale VS1, VS2, VS3 in der Weise, daß das Übertragerelement ÜEL stets in Richtung wachsender Amplituden des empfangenen HF Signals geführt wird. Mit dem Auftreten des Orientierungssignals OS löst die Antriebsführungs- und Koppeleinrichtung beispielsweise eine Linksdrehbewegung des Armes aus. Nimmt hierbei die Amplitude zu, so wird die Bewegung so lange beibehalten, bis das Maximum erreicht ist. Nimmt dagegen die Amplitude ab, so wird die Drehrichtung umgesteuert. Ist die durch die Drehbewegung bestmögliche Annäherung der beiden Übertragerelemente erreicht, d. h. die Amplitude ändert sich nicht mehr, was das Signal VS2 anzeigt, so wird die Drehbewegung abgeschaltet und der Antrieb Ar zum Ausfahren des Arms in radialer Richtung eingeschaltet. Das Übertragerelement ÜEL bewegt sich nun in radialer Richtung auf das Übertragerelement ÜEF am Fahrzeug zu, bis das Übertragerelement ÜEL genau unter dem Übertragerelement ÜEF am Fahrzeug zu stehen kommt. In dieser Stellung ist das maximale HF-Signal zu erwarten.

Zum Schluß erfolgt nun die Vertikalbewegung über den Antrieb Az bis beide Übertragerelemente einander berühren. Zur Erhöhung der Koppelgenauigkeit kann nun der Annäherungsversuch wiederholt werden. Dazu wird das Übertragerelement ÜEL wenige mm in z-Richtung zurückbewegt, so daß keine Berührung mehr zwischen beiden Übertragerelementen besteht. Bei einer erneuten Auslösung des Annäherungsablaufes ist zu erwarten, daß bei der Annäherung aus geringerer Anfangsentfernung eine höhere Koppelgenauigkeit erreicht wird.

Bei der folgenden Berührung beider Übertragerelemente werden die Antriebe stillgesetzt und das Signal "Kopplung erreicht" KER von der Antriebsführungs- und Koppeleinrichtung ausgegeben. Das Signal "Kopplung erreicht" wird einem Tastsignalgeber TSG zugeführt. Der Tastsignalgeber wandelt die an das Fahrzeug zu sendenden Signale in eine getastete Modulation des Wechselrichterausgangstroms um. Zu diesem Zweck schaltet das Tastsignal TSI den Wechselrichter in einem signaltypischen Rhythmus ein und aus.

Der Stromführungsgrößenumschalter SFU des Wechselrichters befindet sich bei dieser Signalgebung noch in der Grundstellung, in der nur eine für das Senden der Tastsignale verwendete Stromführungsgröße Is an den Stromführungsgrößeneingang IFE des Wechselrichters geschaltet ist. Der im Rhythmus des Signales KER modulierte Mittelfrequenzausgangsstrom MFI des Wechselrichters erzeugt nun in dem Übertragerelement ÜEL ein entsprechend dem Tastsignal moduliertes elektromagnetisches Feld, das in dem Übertragerelement ÜEF eine entsprechende Spannung induziert. Die in dem Rhythmus der Tastung enthaltene Information wird nun von dem Tastsignal Demodulator TSD demoduliert. Das nun auf dem Fahrzeug empfangene Signal "Kopplung erreicht" KER schaltet den Orientierungssignalgeber OSG über den Rücksetzeingang R ab und den Ladeanfangssignalgeber LAG über den Setzeingang S ein.

Gleichzeitig wird eine Zeitgeberstufe ΔTL aktiviert, welche die Dauer des Ladeanfangssignals LA begrenzt. Nach Ablauf der Zeit ΔTL im Zeitgeber wird automatisch von dem Ladeanfangssignal LA auf das Stromabweichungssignal ΔI umgeschaltet. Das auf dem selben Weg wie das Orientierungssignal OS auf die Ladeeinrichtung übertragene Ladeanfangssignal LA setzt nun den Ladebetriebsspeicher LBS und schaltet damit den Wechselrichter ein. Außerdem wird der Stromführungsgrößenumschalter SFU von der Stromfünrungsgröße IS auf das nachfolgende vom Frequenzmodulator ausgegebene Stromführungssignal ΔI umgeschaltet.

Das Stromführungsgrößensignal ΔI ist ein Maß für die notwendige Erhöhung des Batterieladestromes. Es wird von dem Ladestromregler LSR auf dem Fahrzeug gebildet und entspricht der Differenz zwischen dem Ladestrom-Sollwert LIS und dem durch das Meßsignal IM erfaßten tatsächlichen Ladestrom. Das Meßsignal IM wird durch den Meßwandler MW aus dem übertragenen Strom MFI gewonnen. Der Ladestromsollwert LIS wird von der Batteriezustandserfassung BZE gebildet. Die Batteriezustandserfassung überwacht den Ladestrom, den Entladestrom, die Temperatur und sonstige zustandsrelevanten Größen der Batterie und kennt daher in jedem Ladezustand der Batterie den notwendigen Ladestrombedarf.

Der Ladestromsollwert LIS wird mit dem Setzen des Stromabweichungsgebers ΔIG durch das Ladestromschaltsignal LIS von der Batteriezustandserfassung auf den Ladestromregler geschaltet. Ist die Batterie geladen, so schaltet die Batteriezustandserfassung über das Signal BGL den Ladeendesignalgeber LEG ein. Das Signal BGL wird zu diesem Zweck gemeinsam mit einem Ausschaltsignal AI, das manuell von einem Tastgeber vorgegeben werden kann und den Ladevorgang abbricht, über die Oder-Stufe V1 dem Setzeingang des Ladeendesignalgebers zugeführt. Gleichzeitig mit dem Setzen des Ladeendesignalgebers wird der Stromabweichungssignalgeber ΔIG in seine Grundstellung zurückgesetzt. Anstelle des Stromabweichungssignals wird nun das Ladeendesignal auf das Ladegerät übertragen. Das Ladeendesignal setzt dort den Ladebetriebsspeicher LBS in seine Grundstellung zurück. Damit werden der Wechselrichter und die Stromübertragung auf das Fahrzeug abgeschaltet.

Gleichzeitig löst das Ladeendesignal in der Antriebsführungs- und Koppeleinrichtung das Zurückholen der Antriebskoordinaten in die Grundstellung aus. Sind diese in der Grundstellung angekommen, werden von der Radiuskoordinate der Endschalter ESr und von der Z-Koordinate der Endschalter ESZ betätigt. Die Antriebsführungs- und Koppeleinrichtung gibt daraufhin das Startfreigabesignal SFR aus. Das Startfreigabesignal schaltet nun den Wechselrichter über den Tastsignalgeber TSG und das Tastsignal TSI erneut ein und aus. In diesem entkopbelten Zustand der Übertragerelemente ÜEL und ÜEF kann zwar keine Energie übertragen werden, aber in dem Übertragerelement ÜEF eine ausreichend hohe Signalspannung induziert werden, die der Tastsignaldemodulator auf dem Fahrzeug demoduliert. Das demodulierte Startfreigabesignal SFR setzt nun den Ladeendesignalgeber zurück und bringt den Startsignalgeber STG in die Stellung "Fahrzeug startbereit", was durch das Signal FSB angezeigt wird.

## Patentansprüche

1. Verfahren zur berührungslosen Energieübertragung beim Laden der Batterie eines Fahrzeugs, insbesondere eines Elektroautos, mittels eines aus einem Primärelement (1) und einem Sekundärelement (2) bestehenden induktiven Übertragers, wobei
- das Sekundärelement (2) am Fahrzeug angebracht ist, das Primärelement stationär angebracht und in drei Raumkoordinaten sensorgesteuert motorisch bewegbar ist,
- das Sekundärelement (2) spätestens nachdem das Fahrzeug in eine Näherungsposition zur Ruheposition des Primärelements (1) gebracht worden ist, frei zugänglich ist,
- zum Erreichen einer magnetischen Kopplung das Primärelement (1) mittels einer Regeleinrichtung dem Sekundärelement (2) genähert wird,
- dem Primärelement (1) aus einem ortsfesten Ladegerät (6), das einen Wechselrichter zum Erzeugen einer Frequenz um 25 kHz enthält, ein Strom (I₁) mit dieser Frequenz zugeführt wird,
**dadurch gekennzeichnet**,
- daß die Schaltungselemente, mit den Kondensatoren (C1, C2) und Induktivitäten des Primärelements (1), des Sekundärelements (2) und eines dazwischen liegenden Luftspalts im Zentimeter-Bereich so ausgelegt sind, daß Primär- und Sekundärkreis bei derselben Frequenz in Resonanz kommen, bei der die maximale Leistung übertragen werden kann,
- daß der dabei übertragene Batterieladestrom (I_{L}) gemessen und die Ladestromabweichung (ΔI) von einem Ladestromsollwert (LIS) in einer Batteriezustandserfassung (BZE) und Ladestromregelung (LSR) auf den Fahrzeug gebildet wird,
- daß eine Einrichtung zur berührungslosen Informationsübertragung die Ladestromabweichung (ΔI) zu einem Ladestromsteller des die Ladestromabweichung (ΔI) zu einem Ladestromsteller des Wechselrichters überträgt,
- daß die Einschaltzeiten oder die Frequenz der elektronischen Schalter (T1, T2) des den genannten Strom (I₁) erzeugenden Wechselrichters verändert wird, bis der benötigte Ladestrom eingestellt ist.

2. Verfahren nach Anspruch 1, daduch gekennzeichnet, daß zum Finden der günstigsten Näherungsposition und magnetischen Kopplung zwischen dem bewegbaren Primärelement (1) und dem Sekundärelement (2) auf dem Fahrzeug ein Orientierungssignalgeber (OSG) vorgesehen ist, der während der Annäherung des Primärelementes (1) an das Sekundärelement (2) der Modulationseinrichtung (FMD), welche das von einem Hochfrequenzgenerator (HFG) erzeugte Hochfrequenzsignal (HF) moduliert, ein Orientierungssignal (OS) zuführt, das über ein Übertragungselement (ÜEF) am Fahrzeugboden und ein Übertragungselement (ÜEL) des Primärelements (1) auf das Ladegerät übertragen wird.

3. Verfahren nach Anspruch 2, dadurch gekennzeichnet, daß in dem Ladegerät eine aus einem Spitzengleichrichter (SG), einem Analogdigitalwandler (AD), einem von einem Taktgeber (TG) gesteuerter Speicher (SAA) und einer Vergleichsstufe (VS) bestehende Einrichtung vorgesehen ist, deren Ausgänge (VS1, VS2, VS3) Signale erzeugen, die anzeigen, ob die Amplitude des als Orientierungssignal (OS) modulierten Hochfrequenzsignals (HF) und damit auch die Kopplung zwischen dem am Primärelement (1) angebrachten Übertragungselement (ÜEL) und dem am Fahrzeug angebrachten Übertragungselement (ÜEL) zunimmt, abnimmt oder gleichbleibt.

4. Verfahren nach Anspruch 3, dadurch gekennzeichnet, daß zum Annähern des bewegbaren Primärelements (1) an das Sekundärelement (2), das Primärelement (1) an einem motorisch in allen 3 Raumkoordinaten bewegbaren Arm befestigt ist und das Sekundärelement (2) mit dem Fahrzeug in dem Raumbereich plaziert wird, in den der motorisch bewegbare Arm das Primärelement (1) positioniert, daß die Antriebe (Ar, Aϕ, Az) des bewegbaren Arms über eine Antriebsführungs- und Koppeleinrichtung (AFK) Antriebssteuer- und Regelfunktionen in der Zeit vor Beginn der Energieübertragung ausführen, während ein Demodulator (FDM) das vom Fahrzeug ausgesendete Orientierungssignal (OS) empfängt und der Antriebsführungs- und Koppeleinrichtung (AFK) zuführt, daß die Antriebe (Ar, Aϕ, Az) in Abhängigkeit von den Signalen, die an den Ausgängen (VS1, VS2, VS3) der Vergleichsstufe (VS) auftreten, in Betrieb gesetzt werden und daß die Antriebsführungs- und Koppeleinrichtung (AFK) ein Signal mit der Bedeutung 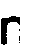 Kopplung erreicht" (KER) ausgibt, wenn die Auswertung der an den Ausgängen (VS1, VS2, VS3) der Vergleichsstufe (VS) auftretenden Signale keine weitere Erhöhung der Amplitude (NA) des emfangenen Orientierungssignals (OS) ergibt.

5. Verfahren nach Anspruch 1, dadurch gekennzeichnet, daß die Batteriezustandserfassung (BZE) einen dem Batteriezustand entsprechenden Ladestromsollwert (LIS) bildet und an einen Ladestromregler (LSR) ausgibt, daß der Ladestromregler (LSR) die Ladestromabweichung (ΔI) bildet, die über einen Ladestromabweichungsgeber (ΔIG) auf die den Hochfrequenzgenerator (HFG) modulierende Modulationseinrichtung (FMD) geschaltet wird, und daß die Batteriezustandserfassung (BZE) bei geladener Batterie ein Signal 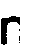 Batterie geladen" (BGL) ausgibt, welches durch Rücksetzen des Ladestromabweichungsgebers (ΔIG) die Ladestromabweichung (ΔI) von der Modulationseinrichtung (FMD) abschaltet und durch Setzen des Ladeendsignalgebers (LEG) das Ladeendsignal (LE) zur Übertragung auf das Ladegerät schaltet.

6. Verfahren nach Anspruch 5, dadurch gekennzeichnet, daß das Primärelement (1) in die Ruheposition nach Beendigung eines Ladevorgangs selbsttätig zurückgeführt wird, daß dazu das von dem Fahrzeug gesendete Ladeendesignal (LE) einen Ladebetriebsspeicher (LBS) zum Abschalten des Wechselrichters (WR) sowie zum Umschalten eines Stromführungsgrößeneinganges (IFE) von der Ladestromabweichung (ΔI) am Ausgang des Demodulators (FDM) auf die vor dem Ladevorgang angeschaltete Stromführungsgröße (IS) mittels eines Stromführungsgrößenumschalters (SFU) in den abgeschalteten Zustand zurücksetzt und daß das Ladeendesignal (LE) der Antriebsführungs- und Koppeleinrichtung (AFK) zugeführt wird und die Rückwärtsbewegung der Antriebe (Ar, Aϕ, Az) auslöst.

7. Verfahren nach Anspruch 1, dadurch gekennzeichnet, daß zur berührungslosen Informationsübertragung vom Fahrzeug zum Ladegerät auf dem Fahrzeug ein Hochfrequenzgenerator (HFG) angeordnet ist, der ein Hochfrequenzsignal (HF) erzeugt, auf das eine als Frequenzmodulator ausgeführte Modulationseinrichtung (FMD) die Ladestromabweichung (ΔI) aufmoduliert, daß das modulierte Hochfrequenzsignal ein Übertragerelement (ÜEF) speist, dessen elektromagnetisches Feld (EMF) das Hochfrequenzsignal (HF) über ein weiteres Übertragerelement (ÜEL) des Primärelements (1), das mit dem Ladegerät in Verbindung steht, auf dieses überträgt, daß in dem Ladegerät ein Demodulator (FDM) das Signal für die Ladestromabweichung (ΔI) regeneriert und daß dieses Signal (ΔI) dem den genannten Strom (I₁) für das Primärelement (1) erzeugenden Wechselrichter zugeführt wird.

## Claims

1. Method for contactless energy transmission during charging of the battery of a vehicle, especially of an electric vehicle, by means of an inductive transformer consisting of a primary element (1) and a secondary element (2), wherein
- the secondary element (2) is mounted at the vehicle, the primary element is mounted to be stationary and to be movable by motor and sensor-controlled in three spatial co-ordinates,
- the secondary element (2) is freely accessible at the latest after the vehicle has been brought into a position of proximity to the rest position of the primary element (1),
- the primary element (1) is brought by means of a regulating equipment close to the secondary element (2) for attainment of a magnetic coupling,
- a current (I₁) with a frequency of about 25 kilohertz is fed to the primary element (1) from a stationary charging apparatus (6) which comprises a direct-current/alternating-current inverter for producing this frequency,
characterised thereby
- that the switching elements, together with the capacitors (C1, C2) and inductances of the primary element (1), the secondary element (2) and an air gap, which is disposed therebetween, in the centimetre range, are so designed that primary circuit and secondary circuit come into resonance when the frequency is the same, in the case of which the maximum power can be transferred,
- that the thus transferred battery charging current (I_{L}) is measured and the charging current deviation (ΔI) from a charging current target value (LIS) is formed in a battery state detector (BZE) and charging current regulation (LSR) on the vehicle,
- that an equipment for contactless information transmission transmits the charging current deviation (ΔI) to a charging current setter of the direct-current/alternating-current inverter, and
- that the switching-on times or the frequency of the electronic switches (T1, T2) of the direct-current/alternating-current inverter producing the said current (I₁) is or are varied until the required charging current is set.

2. Method according to claim 1, characterised thereby that an orienting signal transmitter (OSG) is provided for finding the most favourable proximity position and magnetic coupling between the movable primary element (1) and the secondary element (2) on the vehicle, which transmitter during the approach of the primary element (1) to the secondary element (2) feeds to the modulation equipment (FMD), which modulates the high-frequency signal (HF) produced by a high-frequency generator (HFG), an orienting signal (OS) which is transmitted by way of a transmission element (ÜEF) at the vehicle floor and a transmission element (ÜEL) of the primary element (1) to the charging apparatus.

3. Method according to claim 2, characterised thereby that an equipment consisting of a point-contact rectifier (SG), an analog-to-digital converter (AD), a storage device (SAA) controlled by a pulse transmitter (TG) and a comparator stage (VS) is provided in the charging apparatus, the outputs (VS1, VS2, VS3) of which equipment generate signals which indicate whether the amplitude of the high-frequency signal (HF), which is modulated as orienting signal (OS), and thus also the coupling between the transmission element (ÜEL) mounted at the primary element (1) and the transmission element (ÜEL) mounted at the vehicle increases, decreases or remains the same.

4. Method according to claim 3, characterised thereby that for the approach of the movable primary element (1) to the secondary element (2) the primary element (1) is fastened to an arm motor-driven to be movable in all three spatial co-ordinates and the secondary element (2) together with the vehicle is placed in the spatial region in which the arm motor-driven to be movable positions the primary element, that the drives (Ar, Aϕ, Az) of the movable arm execute drive control and regulation functions by way of a drive guidance and coupling equipment (AFK) in the time before the start of the energy transfer, whilst a demodulator (FDM) receives the orienting signal (OS) emitted by the vehicle and feeds to the drive guidance and coupling equipment (AFK), that the drives (Ar₁, Aϕ, Az) are set into operation in dependence on the signals which arise at the outputs (VS1, VS2, VS3) of the comparator stage (VS), and that the drive guidance and coupling equipment (AFK) issues a signal with the meaning "coupling achieved" (KER) when the evaluation of the signals arising at the outputs (VS1, VS2, VS3) of the comparator stage (VS) yields no further increase in the amplitude (NA) of the received orienting signal (OS).

5. Method according to claim 1, characterised thereby that the battery state detector (BZE) forms a charging current target value (LIS) corresponding to the battery state and transmits to a charging current regulator (LSR), that the charging current regulator (LSR) forms the charging current deviation (ΔI), which is switched by way of a charging current deviation transmitter (ΔIG) to the modulation equipment (FMD) modulating the high-frequency generator (HFG), and that the battery state detector (BZE) in the case of charged battery issues a signal "battery charged" (BGL), which switches off the charging current deviation (ΔI) from the modulation equipment (FMD) by resetting of the charging current deviation transmitter (ΔIG) and switches the charging end signal (LE) for transmission to the charging apparatus by setting the charging end signal transmitter (LEG).

6. Method according to claim 5, characterised thereby that the primary element (1) is automatically returned into the rest position after conclusion of a charging process, that for that purpose the charging end signal (LE) emitted by the vehicle resets into the switched-off state a charging operation storage device (LBS) for the switching-off of the direct-current/alternating-current inverter (WR) as well as for the switching-over of a current supply magnitude input (IFE) from the charging current deviation (ΔI) at the output of the demodulator (FDM) to the current feed magnitude (IS), which is applied before the charging process, by means of a current supply magnitude changeover switch (SFU), and that the charging end signal (LE) is fed to the drive guidance and coupling equipment (AFK) and triggers the rearward movement of the drives (Ar, Aϕ, Az).

7. Method according to claim 1, characterised thereby that a high-frequency generator (HFG) is arranged for the contactless transmission of information from the vehicle to the charging apparatus on the vehicle and generates a high-frequency signal (HF), onto which a modulation equipment (FDM) executed as a frequency modulator modulates the charging current deviation (ΔI), that the modulated high-frequency signal supplies a transmission element (ÜEF), the electromagnetic field (EMF) of which transfers the high-frequency signal (HF) by way of a further transmission element (ÜEL) of the primary element (1), which stands in connection with the charging apparatus, to this, that in the charging apparatus a demodulator (FDM) regenerates the signal for the charging current deviation (ΔI), and that this signal (ΔI) is fed to the direct-current/alternating-current inverter generating the said current (I₁) for the primary element (1).

## Revendications

1. Procédé de transfert d'énergie sans contact lors de la mise en charge de la batterie d'un véhicule, en particulier d'une voiture électrique,
au moyen d'une installation de transfert par induction constituée d'un élément primaire (1) et d'un élément secondaire (2), dans le cas duquel
- l'élément secondaire (2) est disposé sur le véhicule, l'élément primaire est stationnaire et peut se déplacer selon les trois coordonnées spatiales, avec un moteur commandé par un détecteur,
- l'élément secondaire (2) est librement accessible au plus tard dès que le véhicule a été amené en une position rapprochée de la position de repos de l'élément primaire (1),
- pour obtenir un couplage magnétique, on rapproche l'élément primaire (1) de l'élément secondaire (2) au moyen d'un dispositif de régulation,
- à l'élément primaire (1) d'un appareil de mise en charge (6) qui est fixe en position et contient un onduleur pour produire une fréquence de 25 kHz, on amène un courant (I₁) de cette fréquence,
caractérisé par le fait
- que les éléments du circuit, avec les condensateurs (C1, C2) et des inductances de l'élément primaire (1), de l'élément secondaire (2) et d'un écartement d'entrefer, existant entre eux, de l'ordre du centimètre, sont prévus de façon que le circuit primaire et le circuit secondaire viennent en résonance, à la même fréquece, cas dans lequel la puissance maximale peut être transférée,
- que le courant de charge de la batterie (IL), ainsi transféré, est mesuré et que l'écart (ΔI) entre le courant de charge et une valeur prescrite (LIS) de ce courant de charge est formé dans un organe (BZE) de saisie de l'état de batterie et dans un circuit (LSR) de régulation du courant de charge installé sur le véhicule,
- qu'un dispositif de transmission de l'information sans contact transmet l'écart (ΔI) à un organe de réglage du courant de charge de l'onduleur,
- que les temps de mise en circuit ou la fréquence de l'interrupteur électronique (T1, T2) de l'onduleur qui produit le courant mentionné (I1) sont modifiés jusqu'à ce que le courant de charge nécessaire soit obtenu.

2. Procédé selon la revendication 1, caractérisé par le fait que pour trouver la position rapprochée la plus favorable et le couplage magnétique le plus favorable entre l'élément primaire (1), mobile, et l'élément secondaire (2) monté sur le véhicule, est prévu un émetteur (OSG) d'un signal d'orientation qui, pendant que l'élément primaire (1) se rapproche de l'élément secondaire (2), envoie au dispositif de modulation (FND), qui module le signal de haute fréquence (HF) produit par un générateur de haute fréquence (HFG), un signal d'orientation (OS) qui est transmis à l'appareil de mise en charge par l'intermédiaire d'un élément de transfert (UEF) placé sur le plancher du véhicule et d'un élément de transfert (UEL) de l'élément primaire (1).

3. Procédé selon la revendication 2, caractérisé par le fait que dans l'appareil de mise en charge est prévu un dispositif qui est constitué d'un écrêteur de crête (SEG), d'un convertisseur analogique-numérique (AD), d'une mémoire (SAA) commandée par un émetteur de signal de balayage (TG) et d'un étage comparateur (VS), et dont les sorties (VS1, VS2, VS3) produisent des signaux qui indiquent si l'amplitude du signal de haute fréquence (HF), modulé en tant que signal d'orientation (OS), et donc également le couplage entre l'élément de transfert (UEL) rapporté sur l'élément primaire (1) et l'élément de couplage (UEL) rapporté sur le véhicule, croît, décroît ou reste identique.

4. Procédé selon la revendication 3, caractérisé par le fait que pour rapprocher l'élément primaire (1), mobile, de l'élément secondaire (2), l'élément primaire (1) est fixé à un bras motorisé, mobile dans les trois coordonnées de l'espace et qu'avec le véhicule, on place l'élément secondaire (2) dans le domaine de l'espace dans lequel le bras motorisé mobile positionne l'élément primaire (1), que les mécanismes d'entraînement (AR, Aϕ, Az) du bras mobile assurent, par l'intermédiaire d'un dispositif (AFK) de guidage des mécanismes d'entraînement et de couplage, des fonctions de commande de mécanisme d'entraînement et de régulation, ceci avant le début du transfert de l'énergie, tandis qu'un démodulateur (FDM) reçoit le signal d'orientation (OS) émis par le véhicule et l'envoie au dispositif (AFK) de guidage des mécanismes d'entraînement et de couplage, qu'en fonction des signaux qui apparaissent aux sorties (VS1, VS2, VS3) de l'étage comparateur (VS), les mécanismes d'entraînement (AR, Aϕ, Az) sont mis en marche et que le dispositif (AFK) de guidage du mécanisme d'entraînement et de couplage émet un signal signifiant "couplage atteint" (KER) lorsque le traitement des signaux qui apparaissent aux sorties (VS1, VS2, VS3) de l'étage comparateur (VS) n'indique aucun autre accroissement de l'amplitude (NA) du signal d'orientation reçu (OS).

5. Procédé selon la revendication 1, caractérisé par le fait que l'organe (BZE) de saisie de l'état de la batterie forme une valeur prescrite (LIS) du courant de charge correspondant à l'état de la batterie et l'envoie à un régulateur (LSR) du courant de charge, que le régulateur (LSR) du courant de charge forme l'écart (ΔI) du courant de charge qui, par l'intermédiaire d'un émetteur (ΔIG) de l'écart du courant de charge, est envoyé au dispositif de modulation (FMD) qui module le générateur de haute fréquence (HFG) et que, la batterie étant chargée, l'organe (BZE) de saisie de l'état de la batterie émet un signal "batterie chargée" (BGL) qui, par inactivation de l'émetteur (ΔIG) de l'écart du courant de charge, supprime du dispositif de modulation (FMD)) l'écart (ΔI) du courant de charge et, par activation de l'émetteur (LEG) du signal de fin de charge, émet le signal (LE) de fin de charge pour transmission à l'appareil de mise en charge.

6. Procédé selon la revendication 5, caractérisé par le fait que l'élément primaire (1) est automatiquement ramené dans sa position de repos une fois terminé un processus de charge, que pour cela le signal (LE) de fin de charge, envoyé par le véhicule, remet hors circuit, au moyen d'un commutateur (SFU) des valeurs de passage du courant, une mémoire (LBS) d'utilisation de la charge pour mettre hors circuit l'onduleur (WR) et pour mettre, à l'entrée (IFE) des valeurs de passage du courant, au lieu de l'écart (ΔI) du courant de charge à la sortie du démodulateur (FDM), la valeur (IS) de passage du courant qui y était avant le processus de charge, et que le signal (LE) de fin de charge est envoyé au dispositif (AFK) de guidage des mécanismes d'entraînement et de couplage et qu'il déclenche le mouvement de retour des mécanismes d'entraînement (AR, Aϕ, Az).

7. Procédé selon la revendication 1, caractérisé par le fait que, pour la transmission de l'information, sans contact, depuis le véhicule vers l'appareil de mise en charge, est disposé sur le véhicule un générateur de haute fréquence (HFG) qui produit un signal de haute fréquence (HF) que le dispositif de modulation (FMD), réalisé sous forme de modulateur de fréquence, module avec un écart (ΔI) du courant de charge, que le signal de haute fréquence, modulé, parvient à un élément de transfert (UEF) dont le champ électromagnétique (EMF) transmet, par l'intermédiaire d'un autre élément de transfert (UEL) de l'élément primaire (1), relié à l'appareil de mise en charge, le signal de haute fréquence (HF) à cet élément primaire, que, dans l'appareil de mise en charge, un démodulateur (FDM) régénère le signal pour l'écart (ΔI) du courant de charge et que ce signal (ΔI) est envoyé à l'onduleur qui produit, pour l'élément primaire (1), le courant mentionné (I1).
